# EUROPEAN PATENT SPECIFICATION

(11) **EP 3 239 501 B1**
(45) Date of publication and mention of the grant of the patent: **30.10.2019**
(21) Application number: 15873300.6
(22) Date of filing: 25.12.2015
(51) Int. Cl.: F02D 41/04, F02D 9/02, F02D 15/00, F02D 41/22, F02D 41/32, F02D 43/00, F02D 41/10, F02D 41/34, F02D 13/02, F02D 41/00

(54) **CONTROL DEVICE FOR INTERNAL COMBUSTION ENGINE**
STEUERUNGSVORRICHTUNG FÜR VERBRENNUNGSMOTOR
DISPOSITIF DE COMMANDE POUR MOTEUR À COMBUSTION INTERNE

(30) Priority: 25.12.2014 JP 2014263220
(43) Date of publication of application: 01.11.2017
(73) Proprietor: TOYOTA JIDOSHA KABUSHIKI KAISHA, Toyota-shi, Aichi-ken 471-8571 (JP)
(72) Inventor: ASANO, Morito, Ikeda-shi Osaka 563-8651 (JP); ISOBE, Shinpei, Toyota-shi Aichi 471-8571 (JP); YAMAZAKI, Kiyotaka, Ikeda-shi Osaka 563-8651 (JP)
(74) Representative: D Young & Co LLP
(86) International application number: PCT/JP2015/086297
(87) International publication number: WO 2016/104732

(56) References cited:
- JP-A- 2005 106 020
- JP-A- 2014 125 881
- US-A1- 2002 066 435
- US-A1- 2002 179 055
- US-A1- 2009 217 906
- US-A1- 2011 106 410

## Description

### TECHNICAL FIELD

The present invention relates to an engine control unit to control an internal combustion engine equipped with a variable valve timing (VVT) mechanism that can vary the opening timing and/or the closing timing of an intake valve.

### BACKGROUND ART

With respect to internal combustion engines to be mounted on cars or the like, ones including VVT mechanisms that can perform variable control on the opening and closing timing of intake valves are publicly known (See following Patent Document, for example).

Realization of the Miller cycle (the Atkinson cycle) is cited as a purpose of a VVT mechanism. That is, the length of a compression stroke is actually shortened than the length of an expansion stroke by setting the valve timing such that an intake valve opens at a timing after the exhaust top dead center and/or the intake valve closes at a timing after the intake bottom dead center. The Miller cycle in which the actual expansion ratio is greater than the actual compression ratio has the advantage of being capable of reducing waste heat and improving thermal efficiency.

In an internal combustion engine performing the Miller cycle operation, the theoretical compression ratio of a cylinder (the ratio of the volume of its combustion chamber of when a piston reaches the bottom dead center to that of when the piston reaches the top dead center) tends upward.

### RELATED ART DOCUMENTS

### PATENT DOCUMENTS

Patent document 1: Japanese Unexamined Patent Application Publication No. 2014-125881.
[0005a] Patent document 2: US Patent Application Publication No. 2011/0106410 A1 discloses a control device for internal combustion engines having a variable valve mechanism.
[0005b] Patent document 3: Japanese Patent Application Publication No. JP 2002 129994 A discloses a pre-ignition suppressed high expansion ratio engine.
[0005c] Patent document 4: US Patent Application Publication No. 2002/0066435 A1 discloses a fail-safe processing system and method for internal combustion.
[0005d] Patent document 5: US Patent Application Publication No. 2009/0217906 A1 discloses an internal combustion engine control method and internal combustion engine system.
[0005e] Patent document 6: US Patent Application Publication No. 2002/0179055 A1 discloses a method of operating an internal combustion engine.

These documents do not disclose the feature wherein the engine control unit amends fuel injection amount to be increased when the current opening degree of the throttle valve is over the upper limit and besides the difference between the current opening degree of the throttle valve and the upper limit is less than a threshold, the engine control unit temporarily stops fuel injection when the current opening degree of the throttle valve is over the upper limit and besides the difference is greater than or equal to the threshold.

Nor do they disclose the additional feature wherein the engine control unit amends fuel injection amount to be increased when the current opening degree of the throttle valve is over the upper limit and besides the opening degree of the throttle valve is less than a threshold, the engine control unit temporarily stops fuel injection when the current opening degree of the throttle valve is over the upper limit and besides the opening degree of the throttle valve is greater than or equal to the threshold.

### SUMMARY OF THE INVENTION

### PROBLEMS TO BE SOLVED BY THE INVENTION

The risk of causing abnormal combustion like pre-ignition or heavy knocking in a cylinder of an internal combustion engine now raises because of enhancing the compression ratio. This kind of abnormal combustion easily occurs in a low speed and high load operation range in which engine speed is low but an accelerator is widely open.

Accordingly it is conceivable to take the preventive measure in that an upper limit is placed on the opening degree of a throttle valve, which is a valve for the restriction of intake gas, so as to prevent transition to the operation range at high risk of causing the abnormal combustion. The actual compression ratio of the cylinder is influenced by intake valve timing presently achieved. When the intake valve timing is greatly retarded, the risk of causing the abnormal combustion is lowered, hence decreasing the opening degree of the throttle valve does not contribute to preventing the abnormal combustion but only reduces output torque of the internal combustion engine unnecessarily. Therefore it is desirable to adjust the upper limit on the opening degree of the throttle valve according to the intake valve timing presently achieved by the VVT mechanism, that is, the actual compression ratio of the cylinder.

In case malfunction of the VVT mechanism or another incident that suddenly changes the intake valve timing occurs, the opening degree of the throttle valve may far surpass the proper upper limit temporarily. In that case, the possibility of causing the abnormal combustion, for example pre-ignition in the cylinder is increased. Moreover, even if a closing operation to decrease the opening degree of the throttle valve to the proper upper limit is executed, a time lag exists between the decreasing of the opening degree of the throttle valve and the decreasing of the amount of the intake gas that actually flows into the cylinder, and there is consequently concern about causing the abnormal combustion in succession until the actual compression ratio of the cylinder falls.

It is an object of the present invention, which first pays attention to the above points, to prevent causing the abnormal combustion in succession appropriately.

### MEANS OF SOLVING THE PROBLEMS

According to the present invention, an engine control unit to control an internal combustion engine equipped with a variable valve timing mechanism that can vary the opening timing and/or the closing timing of an intake valve and alter the actual compression ratio of a cylinder is configured such that the engine control unit sets an upper limit on the opening degree of a throttle valve lower in a situation where the actual compression ratio of the cylinder is high than the upper limit on the opening degree of the throttle valve in a situation where the actual compression ratio of the cylinder is low, the engine control unit amends fuel injection amount to be increased so that the air-fuel ratio of a mixture gets rich or temporarily stops fuel injection when the current opening degree of the throttle valve is over the upper limit and besides the difference between the current opening degree of the throttle valve and the upper limit is enlarged to be greater than or equal to a predetermined value.

More specifically, the engine control unit amend fuel injection amount to be increased when the difference between the current opening degree of the throttle valve and the upper limit is less than a threshold, and temporarily stop fuel injection when the difference is greater than or equal to the threshold.

### EFFECTS OF THE INVENTION

The present invention is able to prevent causing the abnormal combustion in succession in the cylinder appropriately.

### BRIEF DESCRIPTION OF THE DRAWINGS

FIG. 1 is a diagram showing a schematic structure of an internal combustion engine and an control unit according to an embodiment of the present invention.
FIG. 2 is a diagram showing the relationship of upper limits on the opening degree of a throttle valve set by the control unit according to the embodiment with engine speed and intake valve timing.

### MODE FOR CARRYING OUT THE INVENTION

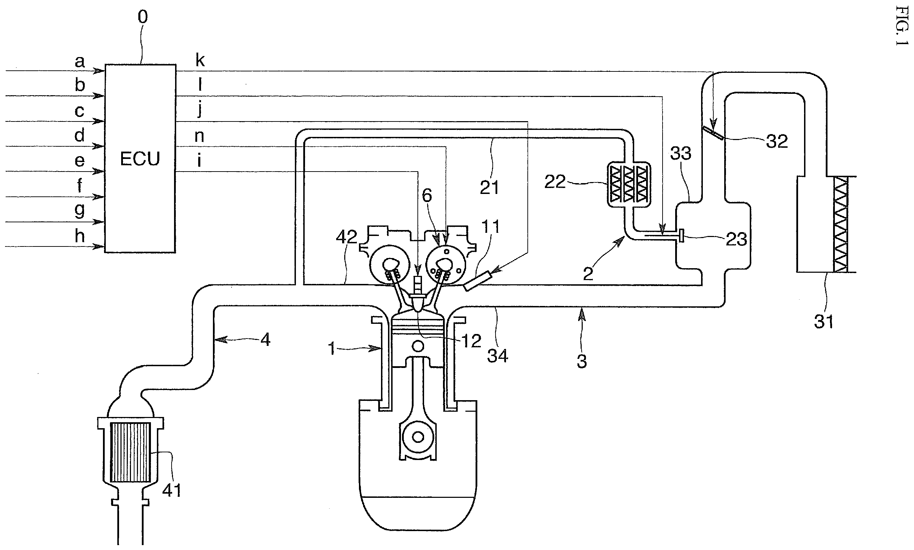

Described below is an embodiment of the present invention with reference to drawings. FIG. 1 shows an overview of an internal combustion engine for a motor vehicle according to the embodiment. The internal combustion engine in this embodiment is a four-stroke spark-ignition gasoline engine containing a plurality of cylinders 1 (one of those is illustrated in FIG. 1). An injector 11 to inject fuel is provided in the neighborhood of an intake port of each cylinder 1. Also, a spark plug 12 is installed in a ceiling part of a combustion chamber of each cylinder 1. The spark plug 12 to which induced voltage generated in an ignition coil is applied occurs spark discharge between a central electrode and a ground electrode. The ignition coil, together with an igniter that is a semiconductor switching element, is incorporated in a coil case.

An intake passage 3 to provide intake gas takes air in from the outside and guides it to the intake port of each cylinder 1. An air cleaner 31, an electronic throttle valve 32, a surge tank 33, and an intake manifold 34 are arranged in this order from the upstream on the intake passage 3.

An exhaust passage 4 to discharge exhaust gas guides the exhaust gas emitted as a result of combustion of the fuel in the cylinders 1 from an exhaust port of each cylinder 1 to the outside. An exhaust manifold 42 and a three-way catalyst 41 to clean the exhaust gas up are arranged in this order from the upstream on the exhaust passage 4.

An exhaust gas recirculation (EGR) device 2 that makes what is called high-pressure-loop EGR has components including an external EGR passage 21 to connect an upper side from the catalyst 41 in the exhaust passage 4 to a lower side from the throttle valve 32 in the intake passage 3, an EGR cooler 22 provided on the EGR passage 21, and an EGR valve 23 to open and shut the EGR passage 21 so as to control the amount of EGR gas flowing through the EGR passage 21. The inlet of the EGR passage 21 is connected to the exhaust manifold 42 or a predetermined position downstream from it in the exhaust passage 4. The outlet of the EGR passage 21 is connected to a predetermined position upstream from the throttle valve 32, particularly the surge tank 33 in the intake passage 3.

The internal combustion engine in this embodiment is equipped with a VVT mechanism 6 that can perform variable control on the opening and closing timing of an intake valve of each cylinder 1. The VVT mechanism 6 is already known one (electric-motor-driven WT) that alters rotation phase of an intake camshaft for driving the intake valve of each cylinder 1 relative to a crankshaft with an electric motor. It is well known that the intake camshaft in the internal combustion engine is driven by the crankshaft and rotates, the crankshaft being an output shaft of the internal combustion engine, rotary driving force supplied through the crankshaft being applied to the intake camshaft. A wrapping transmission (not illustrated) to transmit the rotary driving force exists between the crankshaft and the camshaft. The wrapping transmission has components including a crankshaft sprocket (or pulley) provided on the crankshaft side, a camshaft sprocket (or pulley) provided on the intake camshaft side, and a timing chain (or belt) wrapped around these sprockets (or pulleys). The VVT mechanism 6 makes the intake camshaft rotate relatively with the cam sprocket so that the rotation phase of the intake camshaft relative to the crankshaft is altered, thereby the opening and closing timing of the intake valve is varied.

According to need, the internal combustion engine in this embodiment can perform the Miller cycle operation in which the closing timing of the intake valve is retarded to be much later (for example, 55 or over crank-angle degrees later) than the intake bottom dead center. The opening timing of the intake valve is retarded up to the approximate exhaust top dead center or a timing slightly later (for example, about 5 crank-angle degrees later) than the exhaust top dead center in the Miller cycle operation.

An electronic control unit (ECU) 0 that is an engine control unit for the internal combustion engine according to the embodiment is a microcomputer system having a processor, a memory, an input interface, an output interface, and so on.

Input to the input interface of the ECU 0 are a vehicle speed signal a that is output by a vehicle speed sensor to detect vehicle speed, a crank angle signal b that is output by an engine rotation sensor to detect the rotation angle of the crankshaft and engine speed, an accelerator opening signal c that is output by a sensor to detect the stroke position of an accelerator pedal or the opening degree of the throttle valve 32, which is accelerator opening degree (so to speak, demand load), a coolant temperature signal d that is output by a water temperature sensor to detect the temperature of engine coolant suggesting the temperature of the internal combustion engine, a vibration signal e that is output by a vibration-type knock sensor to detect the amplitude of vibration of a cylinder block including the cylinders 1, an intake gas temperature and pressure signal f that is output by a temperature and pressure sensor to detect the temperature and pressure of the intake gas in the intake passage 3 (particularly, in the surge tank 33), a cam angle signal g that is output by a cam angle sensor at a plurality of cam angles of the intake camshaft, a brake signal h that is output by a sensor (such as a break switch, a master-cylinder pressure sensor) to detect the fact a brake pedal is depressed or the stroke position of the brake pedal, and so on.

The crank angle sensor measures the rotation angle of a rotor that is fixed to the end part of the crankshaft and rotates integrally with the crankshaft. Teeth or protrusions are formed on the rotor at intervals of predetermined degrees along the rotation direction of the crankshaft. Typically the teeth or protrusions are arranged every time the crankshaft rotates by 10 degrees. The crank angle sensor facing the outer circumference of the rotor generates a pulse signal on each occasion that the crank angle sensor detects the individual tooth or protrusion passing through the neighborhood of the sensor, the pulse signal constitutes the crank angle signal b. However, the crank angle sensor does not output thirty-six pulses while the crankshaft rotates once. Some of the teeth or protrusions of the rotor on the crankshaft are missing. Tooth-missing sections each correspond to specific rotation phase angles of the crankshaft. Parts of the pulse train of the crank angle signal b are also missing due to the tooth-missing sections. Based on the missing pulses, it is possible to determine the absolute angle (attitude) of the crankshaft, in other words, the present position of a piston in each cylinder 1.

Moreover, the cam angle sensor measures the rotation angle of a rotor that is fixed to the end part of the intake camshaft and rotates integrally with the intake camshaft. Teeth or protrusions are formed on the rotor at intervals of predetermined degrees along the rotation direction of the intake camshaft. The cam angle sensor facing the outer circumference of the rotor generates a pulse signal on each occasion that the cam angle sensor detects the individual tooth or protrusion passing through the neighborhood of the sensor, the pulse signal constitutes the cam angle signal g. By referring to both the crank angle signal b and the cam angle signal g, it is possible not only to discern and determine the present stroke of each cylinder 1 but also to elucidate the present intake valve timing (the advance angle of the intake valve timing) that the VVT mechanism 6 achieves.

Output from the output interface of the ECU 0 are an ignition signal i to the igniter, a fuel injection signal j to the injector 11, an opening operation signal k to the throttle valve 32, an opening operation signal 1 to the EGR valve 23, a control signal n of the intake valve timing to the VVT mechanism 6, and so on.

The processor on the ECU 0 reads and executes programs stored in the memory beforehand, and calculates operation parameters so as to control the operation of the internal combustion engine. The ECU 0 receives various information a, b, c, d, e, f, g and h necessary for the operation control of the internal combustion engine through the input interface, perceives the engine speed, and estimates the amount of the intake gas filling the cylinder 1. Then, the ECU 0 determines the various operation parameters such as required fuel injection amount, the timing of fuel injection (containing the number of times of injecting the fuel to one combustion), fuel injection pressure, the timing of ignition, required EGR rate (or EGR amount), and the opening and closing timing of the intake valve, based on the engine speed, the amount of the intake gas, and so on. The ECU 0 applies the various control signals i, j, k, 1 and n corresponding to the operation parameters through the output interface.

The throttle valve 32 as an intake throttle valve is usually operated depending on the stroke position of the accelerator pedal by a driver. That is, as the amount of pressing the accelerator pedal is increased, the opening degree of the throttle valve 32 is enlarged. However, there is concern about causing abnormal combustion like pre-ignition or heavy knocking in succession due to opening the throttle valve 32 widely when the engine speed is low, in other words, when movement velocity of the piston in each cylinder 1 is slow. Therefore the ECU 0 according to the embodiment places an upper limit on the opening degree of the throttle valve 32 and, no matter how large the amount of pressing the accelerator pedal is, does not open the throttle valve 32 beyond the upper limit of the opening degree for the sake of preventing the abnormal combustion from occurring.

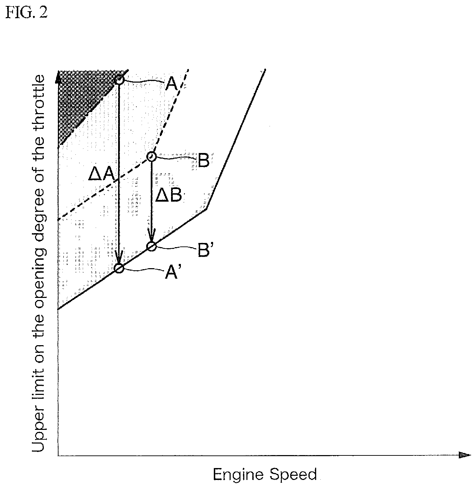

FIG. 2 exemplifies the upper limit on the opening degree of the throttle valve 32 that the ECU 0 sets. Basically, the lower the engine speed becomes, the lower the upper limit on the opening degree of the throttle valve 32 is set to be. An area marked with dots (halftone) in FIG. 2 indicates the operation range at high risk of causing the abnormal combustion such as the pre-ignition. The ECU 0 prevents the state of the internal combustion engine from transiting to such operation range by controlling the opening degree of the throttle valve 32 to be smaller than or equal to the upper limit. When the engine speed becomes rather high, the ECU 0 operates the throttle valve 32 after abolishing the upper limit or setting the upper limit to an opening degree of 100% because it is difficult for the pre-ignition to occur.

On top of that, in this embodiment, the upper limit on the opening degree of the throttle valve 32 is modified depending on the present opening and closing timing of the intake valve achieved by the VVT mechanism 6.

While the rotation phase of the intake camshaft relative to the crankshaft is returned to the maximum retarded position with the VVT mechanism 6, i.e., the intake valve timing is retarded to the maximum, the intake valve opens at a timing of the approximate exhaust top dead center or at a timing slightly after the exhaust top dead center and closes at a timing delayed greatly from the intake bottom dead center. As the rotation phase of the intake camshaft relative to the crankshaft is advanced from the maximum retarded position, the opening timing of the intake valve becomes before the exhaust top dead center, and besides the closing timing of the intake valve comes near the intake bottom dead center. The amount of the intake gas filling the cylinder 1 (and the fuel injection amount) is increased as a result.

The smaller the advance amount of the intake valve timing from the maximum retarded timing is, the more the ECU 0 heightens the upper limit on the opening degree of the throttle valve 32 (or eases the limitation on the opening degree of the throttle valve 32) so as to expand the movable range of the throttle valve 32. In FIG. 2, the solid line represents the upper limit on the opening degree of the throttle valve 32 in a situation where the advance amount of the intake valve timing is large, the dot-dash line represents the upper limit on the opening degree of the throttle valve 32 in a situation where the advance amount of the intake valve timing is small. Also, the broken line represents the upper limit on the opening degree of the throttle valve 32 in a situation where the advance amount of the intake valve timing is medium. The upper limit on the opening degree of the throttle valve 32 is higher in the order of the dot-dash line, the broken line, the solid line.

As the advance amount of the intake valve timing is reduced, the closing timing of the intake valve is retarded, the actual compression ratio of the cylinder 1 is lowered, the amount of the intake gas filling the cylinder 1 is decreased. This means that the risk of causing the pre-ignition or the like in the cylinder 1 is reduced. The ECU 0 hence heightens the upper limit on the opening degree of the throttle valve 32 according to the reduction of the actual compression ratio of the cylinder 1 and enables the throttle valve 32 to open widely even in a low or medium speed range so as to obtain performance that the internal combustion engine originally has.

In contrast, as the advance amount of the intake valve timing is enlarged, the closing timing of the intake valve is advanced, the actual compression ratio of the cylinder 1 is heightened, the amount of the intake gas filling the cylinder 1 is increased. This means that the risk of causing the pre-ignition or the like in the cylinder 1 is enlarged. The ECU 0 hence lowers the upper limit on the opening degree of the throttle valve 32 according to the enlargement of the actual compression ratio of the cylinder 1 and limits the widening of the throttle valve 32 in the low or medium speed range so as to prevent the pre-ignition or the like from occurring.

While the upper limit on the opening degree of the throttle valve 32 is heightened, it is preferable that the amount of change of (or the amount of raising) the upper limit per unit time or per unit revolution of the engine (per number of times of expansion strokes in the cylinder 1) be set to be small. On the other hand, while the upper limit on the opening degree of the throttle valve 32 is lowered, it is preferable that the amount of change of (or the amount of lowering) the upper limit per unit time or per unit revolution of the engine be set to be larger than the amount of change of (or the amount of raising) the upper limit being heightened. In this way, heightening the upper limit on the opening degree of the throttle valve 32 slowly and lowering the upper limit fast is effective for surely preventing the abnormal combustion.

While the upper limit on the opening degree of the throttle valve 32 is heightened, the upper limit may be determined based on the time series f'(t) obtained by a smoothing process (for example, calculating a moving average) or a low-pass filtering of a time series f(t) of the intake valve timing at time t. In this situation, as f'(t) is retarded, the upper limit on the opening degree of the throttle valve 32 is heightened. In contrast to that, while the upper limit on the opening degree of the throttle valve 32 is lowered, the upper limit is determined based on the intake valve timing f(t) unprocessed with the smoothing process or the low-pass filtering In this situation, needless to say, as f(t) is advanced, the upper limit on the opening degree of the throttle valve 32 is lowered.

It is noted that the ECU 0 lowers the upper limit on the opening degree of the throttle valve 32 to the lowest value indicated with the solid line in FIG. 2 immediately in case of detecting that any failure (such as immovableness of the rotation phase of the intake camshaft at the maximum advanced position) occurs in the VVT mechanism 6. The ECU0 judges that the VVT mechanism 6 fails when the state in which the difference between the intake valve timing that the ECU0 gives to the VVT mechanism 6 by inputting the control signal n and the actual intake valve timing that the ECU 0 perceives by referring to the crank angle signal b and the cam angle signal g is greater than or equal to a predetermined amount continues for a certain time or a certain number of rotation (or a certain number of expansion strokes in the cylinder 1), for instance.

The ECU 0 may lower the upper limit on the opening degree of the throttle valve 32 to the lowest value indicated with the solid line in FIG. 2 immediately in case of detecting that the abnormal combustion such as the pre-ignition occurs in the cylinder 1. The ECU 0 can judge whether the abnormal combustion occurs in the cylinder 1 or not by referring to the vibration signal e.

By the way, the present opening degree of the throttle valve 32 can temporarily be far higher than the proper upper limit in such cases as the opening and closing timing of the intake valve changes abruptly owing to malfunction of the VVT mechanism 6 or other reasons, or occurrence of the abnormal combustion is detected. For example, when the current operation range of the internal combustion engine is at the point A on the dot-dash line or the point B on the broken line illustrated in FIG. 2, if the intake valve timing is rapidly advanced by an advance amount corresponding to the solid line, the rightfully proper upper limit on the opening degree of the throttle valve 32, which is matched with the intake valve timing and is able to avoid causing the abnormal combustion, will be the point A' or the point B' on the solid line. That is, as a sequel to rapidly advancing the intake valve timing, the present opening degree of the throttle valve 32 deviates from the proper upper limit by ΔA or ΔB.

Of course, while the intake valve timing is advanced in that manner, an operation is executed such that the opening degree of the throttle valve 32 is decreased from the point A to the point A', or from the point B to the point B'. However, a time lag exists between the decreasing of the opening degree of the throttle valve 32 and the decreasing of the amount of the intake gas that actually flows into the cylinder 1, thereby there is concern about causing the abnormal combustion in succession until the actual compression ratio of the cylinder 1 falls actually.

In order to prevent causing the abnormal combustion in succession appropriately, the ECU 0 according to the embodiment amends the fuel injection amount to be increased or temporarily stops fuel injection, with the decreasing of the opening degree of the throttle valve 32 or in anticipation of the decreasing of the opening degree of the throttle valve 32, when the current opening degree A or B of the throttle valve 32 is over the proper upper limit A' or B' and besides the difference ΔA or ΔB between both of those is enlarged to be greater than or equal to a predetermined value.

Increasing of the fuel injection amount so that the air-fuel ratio of a mixture gets rich yields a temperature fall inside the combustion chamber of the cylinder 1 by heat of vaporization or latent heat of the fuel and reduces the risk of causing the abnormal combustion such as the pre-ignition. Also, a fuel cut-off to interrupt the fuel injection is obviously conducive to avoidance of the abnormal combustion.

The influence of stopping the fuel injection temporarily upon engine torque that the internal combustion engine outputs is naturally greater than that of amending the fuel injection amount to be increased. Therefore it is desirable to elect to amend the fuel injection amount to be increased when the difference ΔA or ΔB between the current opening degree A or B of the throttle valve 32 and the proper upper limit A' or B' is less than a threshold, and elect to temporarily stop the fuel injection when the difference ΔA or ΔB is greater than or equal to the threshold, through comparing the difference ΔA or ΔB with the threshold. According to the example illustrated in FIG. 2, the fuel cut-off to temporarily stop the fuel injection is carried out in a situation where the current opening degree of the throttle valve 32 is at the point A and the difference ΔA from the proper upper limit A' is comparatively large. In contrast, the amendment of the fuel injection amount to be increased so that the air-fuel ratio gets rich is carried out in a situation where the current opening degree of the throttle valve 32 is at the point B and the difference ΔB from the proper upper limit B' is comparatively small.

Other than the above, it is possible to elect to amend the fuel injection amount to be increased when the current opening degree A or B of the throttle valve 32, in other words the engine load itself, is less than a threshold, and elect to temporarily stop the fuel injection when the current opening degree A or B is greater than or equal to the threshold, through comparing the current opening degree A or B with the threshold. Since the possibility cannot be denied that the fuel cut-off causes a destabilization of engine rotation or an engine stall, the fuel cut-off may be carried out only when the current engine speed is greater than or equal to a threshold, otherwise the amendment of the fuel injection amount to be increased may be carried out instead of the fuel cut-off.

After the amendment of the fuel injection amount to be increased or stopping the fuel injection associated with a sudden change in the intake valve timing, the amendment of the fuel injection amount to be increased is ended or the fuel injection is resumed at the time when the opening degree A or B of the throttle valve 32 is decreased to the proper amount A' or B', or after the lapse of a definite period or a definite number of rotation from the time.

According to the embodiment, the engine control unit 0 to control the internal combustion engine equipped with the VVT mechanism 6 that can vary the opening and closing timing of the intake valve and alter the actual compression ratio of the cylinder 1 is configured such that the engine control unit 0 sets the upper limit on the opening degree of the throttle valve 32 lower in the situation where the actual compression ratio of the cylinder 1 is high than the upper limit on the opening degree of the throttle valve 32 in the situation where the actual compression ratio of the cylinder 1 is low, the engine control unit 0 amends the fuel injection amount to be increased so that the air-fuel ratio of a mixture gets rich or temporarily stops the fuel injection when the current opening degree of the throttle valve 32 is over the proper upper limit and besides the difference between the current opening degree of the throttle valve and the upper limit is enlarged to be greater than or equal to the predetermined value.

This embodiment makes it possible to prevent causing the abnormal combustion in succession in the cylinder 1 appropriately. Consequently, heightening the upper limit on the opening degree of the throttle valve 32 as much as possible so as to obtain maximum performance that the internal combustion engine originally has and improve acceleration ability of the motor vehicle is enabled.

The present invention is not limited to the above-described embodiment. In particular, the specific structure of the VVT mechanism 6 to vary the opening timing and/or the closing timing of the intake valve at each cylinder 1 in the internal combustion engine is arbitrary and not particularly limited. Other than the VVT mechanism that advances/retards the rotation phase of the intake camshaft relative to the crankshaft, one that is provided with a plurality of cams to drive and open an intake valve and switches the cams properly, one that alters lever ratio of an rocker arm with an electric motor, one that has an intake valve which is an electromagnetic solenoid valve, and so on are known, selecting and using one from those various mechanisms is allowed.

The VVT mechanism 6 that advances/retards the rotation phase of the intake camshaft relative to the crankshaft varies the opening timing and the closing timing of the intake valve simultaneously. If the VVT mechanism 6 other than one of this kind is provided in the internal combustion engine, the VVT mechanism 6 can vary the opening timing and the closing timing of the intake valve separately, vary the opening timing only, or vary the closing timing only. Thereby the advance amount of the opening timing of the intake valve from the maximum retarded timing may differ from the advance amount of the closing timing of the same intake valve from the maximum retarded timing.

It is possible to increase/decrease the amount of the intake gas filling the combustion chamber of the cylinder 1 by advancing/retarding the closing timing of the intake valve only. In respect to the internal combustion engine that can perform the Miller cycle operation in which the opening timing of the intake valve is retarded to be much later than the exhaust top dead center, it is possible to increase/decrease the amount of the intake gas filling the combustion chamber of the cylinder 1 by advancing/retarding the opening timing of the intake valve only. For these cases, similarly to the above embodiment, the upper limit on the opening degree of the throttle valve 32 can be adjusted depending on (the advance amount of) the opening timing or the closing timing of the intake valve. That is, the lower the actual compression ratio of the cylinder 1 is, the higher the upper limit on the opening degree of the throttle valve 32 gets.

Further, the means of detecting the abnormal combustion such as the pre-ignition is not limited to the vibration-type knock sensor. For example, it is possible to judge whether the abnormal combustion occurs or not by detecting an ion current that flows in the electrode of the spark plug 12 when the fuel is combusted inside the combustion chamber of the cylinder 1 and referring to the wave form of the ion current signal.

In addition, regarding to the concrete configurations of the respective components, various modifications are possible without departing from the scope of the present invention as defined by the appended claims.

### INDUSTRIAL APPLICABILITY

The present invention is applicable to controlling of internal combustion engines to be mounted on cars or the like.

### DESCRIPTION OF THE REFERENCE SIGNS

- 0: engine control unit (ECU)
- 1: cylinder
- 11: injector
- 32: throttle valve
- 5: pilot valve part
- 6: variable valve timing (VVT) mechanism
- b: crank angle signal
- c: accelerator opening signal
- e: vibration signal
- g: cam angle signal
- k: opening operation signal
- n: control signal of intake valve timing

## Claims

1. An engine control unit to control an internal combustion engine equipped with a variable valve timing mechanism that can vary the opening timing or the closing timing of an intake valve and alter the actual compression ratio of a cylinder, wherein
the engine control unit sets an upper limit on the opening degree of a throttle valve lower in a situation where the actual compression ratio of the cylinder is high than the upper limit on the opening degree of the throttle valve in a situation where the actual compression ratio of the cylinder is low,
the engine control unit amends fuel injection amount to be increased so that the air-fuel ratio of a mixture gets rich or temporarily stops fuel injection when the current opening degree of the throttle valve is over the upper limit and besides the difference between the current opening degree of the throttle valve and the upper limit is enlarged to be greater than or equal to a predetermined value;
wherein the engine control unit amends fuel injection amount to be increased when the current opening degree of the throttle valve is over the upper limit and besides the difference between the current opening degree of the throttle valve and the upper limit is less than a threshold,
the engine control unit temporarily stops fuel injection when the current opening degree of the throttle valve is over the upper limit and besides the difference is greater than or equal to the threshold.

2. The engine control unit according to claim 1, wherein
the engine control unit does not open the throttle valve beyond the upper limit no matter how large the amount of pressing the accelerator pedal is.

3. An engine control unit to control an internal combustion engine equipped with a variable valve timing mechanism that can vary the opening timing or the closing timing of an intake valve and alter the actual compression ratio of a cylinder, wherein
the engine control unit sets an upper limit on the opening degree of a throttle valve lower in a situation where the actual compression ratio of the cylinder is high than the upper limit on the opening degree of the throttle valve in a situation where the actual compression ratio of the cylinder is low,
the engine control unit amends fuel injection amount to be increased so that the air-fuel ratio of a mixture gets rich or temporarily stops fuel injection when the current opening degree of the throttle valve is over the upper limit and besides the difference between the current opening degree of the throttle valve and the upper limit is enlarged to be greater than or equal to a predetermined value;
wherein the engine control unit amends fuel injection amount to be increased when the current opening degree of the throttle valve is over the upper limit and besides the opening degree of the throttle valve is less than a threshold,
the engine control unit temporarily stops fuel injection when the current opening degree of the throttle valve is over the upper limit and besides the opening degree of the throttle valve is greater than or equal to the threshold.

4. The engine control unit according to claim 1, 2 or 3, wherein
the engine control unit temporarily stops fuel injection only when the current engine speed is greater than or equal to a threshold, otherwise the engine control unit amends fuel injection amount to be increased instead of stopping fuel injection.

5. The engine control unit according to claim 1, 2, 3 or 4, wherein
the lower engine speed becomes, the lower the engine control unit sets the upper limit on the opening degree of the throttle valve to be, in the low or medium speed range.

6. The engine control unit according to claim 1, 2, 3, 4 or 5, wherein
the engine control unit sets the amount of change of the upper limit per unit time or per unit revolution of the engine while the upper limit is lowered to be larger than the amount of change of the upper limit per unit time or per unit revolution of the engine while the upper limit is heightened.

7. The engine control unit according to claim 1, 2, 3,4, 5 or 6, wherein
the engine control unit determines the upper limit based on the time series f'(t) obtained by a smoothing process or a low-pass filtering of a time series f(t) of the intake valve timing at time t while the upper limit on the opening degree of the throttle valve is heightened.

8. The engine control unit according to claim 1, 2, 3, 4, 5, 6 or 7, wherein
the engine control unit lowers the upper limit on the opening degree of the throttle valve to the lowest value in case of detecting that any failure occurs in the variable valve timing mechanism.

9. The engine control unit according to claim 1, 2, 3, 4, 5, 6, 7 or 8, wherein
the engine control unit lowers the upper limit on the opening degree of the throttle valve to the lowest value in case of detecting that the abnormal combustion occurs in the cylinder.

10. The engine control unit according to claim 1, 2, 3,4, 5, 6,7, 8 or 9, wherein
the engine control unit ends the amendment of the fuel injection amount to be increased or resumes the fuel injection at the time when the opening degree of the throttle valve is decreased to the upper limit, or after the lapse of a definite period or a definite number of rotation from the time.

## Patentansprüche

1. Motorsteuerungseinheit, um einen Verbrennungsmotor zu steuern, der mit einem variablen Ventilzeitschaltmechanismus ausgestattet ist, der die Öffnungszeit oder Schließzeit eines Ansaugventils variieren kann und das tatsächliche Verdichtungsverhältnis eines Zylinders verändern kann, wobei
die Motorsteuerungseinheit eine Obergrenze des Öffnungsgrads eines Drosselventils in einer Situation, in der das tatsächliche Verdichtungsverhältnis hoch ist, niedriger einstellt als die Obergrenze des Öffnungsgrads des Drosselventils in einer Situation, in der das tatsächliche Verdichtungsverhältnis des Zylinders niedrig ist,
wobei die Motorsteuerungseinheit die Kraftstoffeinspritzmenge erhöht, sodass das Luft-Kraftstoff-Verhältnis eines Gemischs fett wird, oder die Kraftstoffeinspritzung zeitweise stoppt, wenn der aktuelle Öffnungsgrad des Drosselventils über der Obergrenze liegt und außerdem die Differenz zwischen dem aktuellen Öffnungsgrad des Drosselventils und der Obergrenze erhöht ist, um größer als oder gleich einem festgelegten Wert zu sein;
wobei die Motorsteuerungseinheit die Kraftstoffeinspritzmenge erhöht, wenn der aktuelle Öffnungsgrad des Drosselventils über der Obergrenze liegt und außerdem die Differenz zwischen dem aktuellen Öffnungsgrad des Drosselventils und der Obergrenze kleiner als ein Schwellenwert ist,
wobei die Motorsteuerungseinheit die Kraftstoffeinspritzung zeitweise stoppt, wenn der aktuelle Öffnungsgrad des Drosselventils über der Obergrenze liegt und außerdem die Differenz größer als oder gleich dem Schwellenwert ist.

2. Motorsteuerungseinheit nach Anspruch 1, wobei die Motorsteuerungseinheit das Drosselventil nicht über die Obergrenze hinaus öffnet, unabhängig davon, wie stark das Gaspedal gedrückt wird.

3. Motorsteuerungseinheit, um einen Verbrennungsmotor zu steuern, der mit einem variablen Ventilzeitschaltmechanismus ausgestattet ist, der die Öffnungszeit oder Schließzeit eines Ansaugventils variieren kann und das tatsächliche Verdichtungsverhältnis eines Zylinders verändern kann, wobei
die Motorsteuerungseinheit eine Obergrenze für den Öffnungsgrad eines Drosselventils in einer Situation, in der das tatsächliche Verdichtungsverhältnis hoch ist, niedriger einstellt als die Obergrenze des Öffnungsgrads des Drosselventils in einer Situation, in der das tatsächliche Verdichtungsverhältnis des Zylinders niedrig ist,
wobei die Motorsteuerungseinheit die Kraftstoffeinspritzmenge erhöht, sodass das Luft-Kraftstoff-Verhältnis eines Gemischs fett wird, oder die Kraftstoffeinspritzung zeitweise stoppt, wenn der aktuelle Öffnungsgrad des Drosselventils über der Obergrenze liegt und außerdem die Differenz zwischen dem aktuellen Öffnungsgrad des Drosselventils und der Obergrenze erhöht ist, um größer als oder gleich einem festgelegten Wert zu sein;
wobei die Motorsteuerungseinheit die Kraftstoffeinspritzmenge erhöht, wenn der aktuelle Öffnungsgrad des Drosselventils über der Obergrenze liegt und außerdem der Öffnungsgrad des Drosselventils niedriger als ein Schwellenwert ist,
wobei die Motorsteuerungseinheit die Kraftstoffeinspritzung zeitweise stoppt, wenn der aktuelle Öffnungsgrad des Drosselventils über der Obergrenze liegt und außerdem der Öffnungsgrad des Drosselventils größer als oder gleich dem Schwellenwert ist.

4. Motorsteuereinheit nach Anspruch 1, 2 oder 3, wobei die Motorsteuerungseinheit die Kraftstoffeinspritzung zeitweise nur stoppt, wenn die aktuelle Motordrehzahl größer als oder gleich einem Schwellenwert ist, andernfalls erhöht die Motorsteuerungseinheit die Kraftstoffeinspritzmenge, anstatt die Kraftstoffeinspritzung zu stoppen.

5. Motorsteuerungseinheit nach Anspruch 1, 2, 3 oder 4, wobei
je niedriger die Motordrehzahl wird, desto niedriger stellt die Motorsteuerungseinheit die Obergrenze des Öffnungsgrads des Drosselventils ein, um im niedrigen oder mittleren Drehzahlbereich zu sein.

6. Motorsteuerungseinheit nach Anspruch 1, 2, 3, 4 oder 5, wobei
die Motorsteuerungseinheit die Änderungsmenge der Obergrenze pro Zeiteinheit oder pro Umdrehungseinheit des Motors, während die Obergrenze herabgesetzt wird, einstellt, größer als die Änderungsmenge der Obergrenze pro Zeiteinheit oder pro Umdrehungseinheit des Motors, während die Obergrenze heraufgesetzt wird, zu sein.

7. Motorsteuerungseinheit nach Anspruch 1, 2, 3, 4, 5 oder 6, wobei
die Motorsteuerungseinheit die Obergrenze auf Grundlage der Zeitfolge f'(t) bestimmt, die durch einen Glättungsvorgang oder eine Tiefpassfiltrierung einer Zeitfolge f(t) der Ansaugventilzeit zu einem Zeitpunkt t, während die Obergrenze des Öffnungsgrads des Drosselventils heraufgesetzt wird, erhalten wird.

8. Motorsteuerungseinheit nach Anspruch 1, 2, 3, 4, 5, 6 oder 7, wobei
die Motorsteuerungseinheit die Obergrenze des Öffnungsgrads des Drosselventils auf den niedrigsten Wert herabsetzt, wenn ein Fehler im variablen Ventilzeitschaltmechanismus auftritt.

9. Motorsteuerungseinheit nach Anspruch 1, 2, 3, 4, 5, 6, 7 oder 8, wobei
die Motorsteuerungseinheit die Obergrenze des Öffnungsgrads des Drosselventils auf den niedrigsten Wert herabsetzt, wenn erkannt wird, dass im Zylinder eine anormale Verbrennung stattfindet.

10. Motorsteuerungseinheit nach Anspruch 1, 2, 3, 4, 5, 6, 7, 8 oder 9, wobei
die Motorsteuerungseinheit die Erhöhung der Kraftstoffeinspritzmenge beendet oder die Kraftstoffeinspritzung zu einem Zeitpunkt fortsetzt, wenn sich der Öffnungsgrad des Drosselventils auf die Obergrenze verringert hat oder nachdem ein festgelegter Zeitraum verstrichen ist oder eine festgelegte Anzahl Drehungen von dem Zeitpunkt erfolgte.

## Revendications

1. Unité de commande de moteur pour commander un moteur à combustion interne équipé d'un mécanisme de distribution à programme variable qui peut faire varier le moment d'ouverture ou le moment de fermeture d'une soupape d'admission et modifier le rapport de compression réel d'un cylindre,
l'unité de commande de moteur définissant une limite supérieure du degré d'ouverture d'un papillon des gaz inférieure, dans une situation où le rapport de compression réel du cylindre est haut, à la limite supérieure du degré d'ouverture du papillon des gaz dans une situation où le rapport de compression réel du cylindre est bas,
l'unité de commande de moteur modifiant la quantité d'injection de carburant pour l'augmenter afin que le rapport air-carburant d'un mélange s'enrichisse ou cessant temporairement l'injection de carburant lorsque le degré d'ouverture courant du papillon des gaz est supérieur à la limite supérieure et en outre la différence entre le degré d'ouverture courant du papillon des gaz et la limite supérieure est agrandie de façon à être égale ou supérieure à une valeur prédéterminée ;
l'unité de commande de moteur modifiant la quantité d'injection de carburant pour l'augmenter lorsque le degré d'ouverture courant du papillon des gaz est supérieur à la limite supérieure et en outre la différence entre le degré d'ouverture courant du papillon des gaz et la limite supérieure est inférieure à un seuil,
l'unité de commande de moteur cessant temporairement l'injection de carburant lorsque le degré d'ouverture courant du papillon des gaz est supérieur à la limite supérieure et en outre la différence est égale ou supérieure au seuil.

2. Unité de commande de moteur selon la revendication 1,
l'unité de commande de moteur n'ouvrant pas le papillon des gaz au-delà de la limite supérieure quelle que soit la quantité de pression appliquée sur la pédale d'accélérateur.

3. Unité de commande de moteur pour commander un moteur à combustion interne équipé d'un mécanisme de distribution à programme variable qui peut faire varier le moment d'ouverture ou le moment de fermeture d'une soupape d'admission et modifier le rapport de compression réel d'un cylindre,
l'unité de commande de moteur définissant une limite supérieure du degré d'ouverture d'un papillon des gaz inférieure, dans une situation où le rapport de compression réel du cylindre est haut, à la limite supérieure du degré d'ouverture du papillon des gaz dans une situation où le rapport de compression réel du cylindre est bas,
l'unité de commande de moteur modifiant la quantité d'injection de carburant pour l'augmenter afin que le rapport air-carburant d'un mélange s'enrichisse ou cessant temporairement l'injection de carburant lorsque le degré d'ouverture courant du papillon des gaz est supérieur à la limite supérieure et en outre la différence entre le degré d'ouverture courant du papillon des gaz et la limite supérieure est agrandie de façon à être égale ou supérieure à une valeur prédéterminée ;
l'unité de commande de moteur modifiant la quantité d'injection de carburant pour l'augmenter lorsque le degré d'ouverture courant du papillon des gaz est supérieur à la limite supérieure et en outre le degré d'ouverture du papillon des gaz est inférieur à un seuil,
l'unité de commande de moteur cessant temporairement l'injection de carburant lorsque le degré d'ouverture courant du papillon des gaz est supérieur à la limite supérieure et en outre le degré d'ouverture du papillon des gaz est égal ou supérieur au seuil.

4. Unité de commande de moteur selon la revendication 1, 2 ou 3,
l'unité de commande de moteur cessant temporairement l'injection de carburant uniquement lorsque la vitesse courante du moteur est égale ou supérieure à un seuil, sinon l'unité de commande de moteur modifiant la quantité d'injection de carburant pour l'augmenter au lieu de cesser l'injection de carburant.

5. Unité de commande de moteur selon la revendication 1, 2, 3 ou 4, dans laquelle
plus le moteur ralentit, plus l'unité de commande de moteur définit la limite supérieure du degré d'ouverture du papillon des gaz comme étant dans la plage de vitesse faible ou moyenne.

6. Unité de commande de moteur selon la revendication 1, 2, 3, 4 ou 5,
l'unité de commande de moteur définissant la quantité de changement de la limite supérieure par unité de temps ou par unité de tour du moteur lorsque la limite supérieure est abaissée comme étant supérieure à la quantité de changement de la limite supérieure par unité de temps ou par unité de tour du moteur lorsque la limite supérieure est augmentée.

7. Unité de commande de moteur selon la revendication 1, 2, 3, 4, 5 ou 6,
l'unité de commande de moteur déterminant la limite supérieure sur la base de la série temporelle f'(t) obtenue par un processus de lissage ou un filtrage passe-bas d'une série temporelle f(t) de la soupape d'admission au temps t lorsque la limite supérieure du degré d'ouverture du papillon des gaz est augmentée.

8. Unité de commande de moteur selon la revendication 1, 2, 3, 4, 5, 6 ou 7,
l'unité de commande de moteur abaissant la limite supérieure du degré d'ouverture du papillon des gaz à la valeur la plus basse dans le cas d'une détection d'une quelconque défaillance dans le mécanisme de distribution à programme variable.

9. Unité de commande de moteur selon la revendication 1, 2, 3, 4, 5, 6, 7 ou 8,
l'unité de commande de moteur abaissant la limite supérieure du degré d'ouverture du papillon des gaz à la valeur la plus basse dans le cas d'une détection d'une combustion anormale dans le cylindre.

10. Unité de commande de moteur selon la revendication 1, 2, 3, 4, 5, 6, 7, 8 ou 9,
l'unité de commande de moteur cessant la modification de la quantité d'injection de carburant pour l'augmenter ou reprenant l'injection de carburant au moment où le degré d'ouverture du papillon des gaz est diminué à la limite supérieure, ou après l'écoulement d'une durée définie ou d'un nombre de rotations défini.
